# FASCICULE DE BREVET EUROPEEN

(11) **EP 2 803 542 B1**
(45) Date de publication et mention de la délivrance du brevet: **10.04.2019**
(21) Numéro de dépôt: 14167154.5
(22) Date de dépôt: 06.05.2014
(51) Int. Cl.: B60S 1/38

(54) **Ensemble pour la réalisation d'un système d'essuyage de pare brise de véhicule automobile et dispositif de connexion comprenant un tel ensemble**
Einheit zur Umsetzung eines Scheibenwischsystems für Kraftfahrzeug, und Verbindungsvorrichtung, die eine solche Einheit umfasst
Assembly for producing a windscreen-wiper system for a motor vehicle and connection device including such an assembly

(30) Priorité: 13.05.2013 FR 1354272
(43) Date de publication de la demande: 19.11.2014
(73) Titulaire: Valeo Systèmes d'Essuyage, 78322 Le Mesnil Saint Denis (FR)
(72) Inventeur: Grasso, Giuseppe, 63340 Le Breuil sur Couze (FR); Thebault, Denis, 63000 Clermont Ferrand (FR); Daumas, Philippe, 63730 CORENT (FR); Guilhot, Patrice, 63320 CHIDRAC (FR)
(74) Mandataire: Callu-Danseux, Violaine

(56) Documents cités:
- EP-A1- 2 460 700
- WO-A1-2012/072301
- DE-A1-102011 012 634
- DE-A1-102012 100 879

## Description

Le domaine de la présente invention est celui des équipements pour les véhicules, et plus particulièrement celui des équipements pour l'essuyage des vitres des automobiles.

Les automobiles sont couramment équipées de systèmes d'essuie-glace pour assurer un lavage du pare-brise et éviter que la vision qu'a le conducteur de son environnement ne soit perturbée. En position de travail, ces essuie-glaces sont classiquement entraînés par des bras ou porte-balai effectuant un mouvement de va-et-vient angulaire et comportent des balais allongés, porteurs eux-mêmes de lames racleuses réalisées en une matière élastique. Ces lames frottent contre le pare-brise et évacuent l'eau en l'amenant en dehors du champ de vision du conducteur. Les balais sont réalisés sous la forme, soit, dans une version classique, de palonniers articulés qui tiennent la lame racleuse en plusieurs endroits discrets, soit, dans une version plus récente dénommée "flat blade" (pour "lame plate"), d'un ensemble semi-rigide qui maintient la lame racleuse sur toute sa longueur. Dans les deux solutions, le balai est rattaché au porte-balai de l'essuie-glace par un ensemble constitué d'un connecteur mécanique et d'un adaptateur. Le connecteur mécanique est une pièce qui est sertie sur le palonnier ou directement sur le balai plat, alors que l'adaptateur est une pièce intermédiaire qui permet la fixation du connecteur sur le porte-balai de l'essuie-glace. Ces deux pièces sont reliées l'une à l'autre par un axe transversal qui autorise leur rotation relative, dans un plan perpendiculaire au pare-brise et passant par le porte-balai.

Il est également connu de munir les véhicules de dispositifs permettant d'amener un liquide lave-vitre qui est acheminé depuis un réservoir situé sous le capot et qui est pulvérisé en direction du pare-brise par des buses situées soit à proximité du pare-brise, soit sur l'essuie-glace lui-même pour une meilleure distribution du liquide. Dans le cas de buses placées sur les balais, le liquide lave-vitre est acheminé par des canalisations qui sont fixées sur le porte-balai de l'essuie-glace et qui sont raccordées au balai au niveau du connecteur mécanique par une interface de connexion. L'interface de connexion se fixe sur le connecteur mécanique par des embouts appropriés et assure une nécessaire étanchéité avec lui.

Alors que les canalisations de liquide et l'interface de connexion sont généralement liées au porte-balai de l'essuie-glace, le connecteur mécanique est lié au balai et il est nécessaire d'assurer le branchement de l'interface de connexion sur le connecteur mécanique lors d'un changement de balai. Cette opération s'effectue dans une position, dite de service.

Il est nécessaire de veiller à ce que l'interface de connexion soit correctement alignée, lors de l'installation dans le connecteur mécanique, faute de quoi un mauvais assemblage se traduirait par un risque de fuite du liquide lave-vitre au niveau de la jonction des deux connecteurs.

En outre, lors du désaccouplement ou démontage du balai par rapport au porte-balai, il importe que l'interface de connexion reste attachée au porte-balai. Ceci évite que l'interface de connexion ne soit entraînée par le connecteur mécanique dans son mouvement de séparation d'avec le porte-balai de l'essuie-glace.

Il faut cependant que, après montage du balai dans le bras, l'interface de connexion ne limite pas la nécessaire liberté de mouvement en rotation de l'adaptateur par rapport au connecteur mécanique, en particulier quand le système d'essuyage est à nouveau dans sa position de travail.

On connait à cette fin des balais d'essuie glace dont l'interface de connexion est maintenue en position de service par encliquetage dans des ouvertures d'une pièce rapportée au bras porte balai. Cette disposition nécessite cependant une pièce intermédiaire relativement complexe à réaliser et à assembler au bras.

Le document WO 2012/072301 A1 montre un ensemble pour réaliser un système d'essuyage selon le préambule de la première revendication.

La présente invention a pour but de remédier à ces inconvénients en tout ou partie.

A cet effet, l'invention a pour objet un ensemble pour la réalisation d'un système d'essuyage de pare brise de véhicule automobile comprenant une pièce terminale d'un bras porte-balai, destiné à déplacer un balai d'essuyage, et une interface de connexion, notamment un connecteur hydraulique et/ou électrique d'amenée d'un liquide au balai d'essuyage et/ou pour le chauffage du liquide et/ou du balai, ladite pièce terminale étant configurée pour accueillir un adaptateur permettant la rotation entre ledit bras et le balai, ledit ensemble étant apte à occuper une position de travail dans laquelle ladite interface de connexion est libre par rapport à ladite pièce terminale et une position de service, dans laquelle ladite interface de connexion est orientable par rapport à ladite pièce terminale.

Selon l'invention, ladite pièce terminale est configurée pour guider ladite interface de connexion en position de travail et en position de service.

Ainsi, grâce à ladite pièce terminale elle-même, l'interface de connexion peut être orientée, en étant indexée en position par le guidage sur le bras. Elle peut ainsi être bloquée ou à tout le moins amenée en position de service dans l'orientation voulue, sans pièce intermédiaire. L'invention couvre également le cas où l'interface de connexion est capable de prendre l'orientation voulue au moment de la déconnexion et/ou de la connexion dudit balai sur le bras, par coopération avec le balai et ceci sans pièce intermédiaire.

Ladite interface de connexion est amenée à ladite position de service par un mouvement du balai sur le bras, par exemple, une rotation du balai par rapport au bras, ladite interface étant libre en rotation en position de travail dans ledit bras.

L'invention pourra utiliser les caractéristiques suivantes, prises séparément ou en combinaison:
- ladite interface de connexion comprend au moins une saillie,
- ladite interface de connexion, en particulier par l'intermédiaire de ladite saillie, est rendue visible à travers la pièce terminale, dans la position de service et/ou dans la position de travail,
- ladite interface de connexion, en particulier par l'intermédiaire de ladite saillie, pourra être mise en butée sur la pièce terminale dans ladite position de service,
- ladite interface de connexion, en particulier par l'intermédiaire de ladite saillie, pourra être maintenue orientée par ladite pièce terminale,
- ladite pièce terminale comporte un corps configuré avec au moins une fenêtre et/ou déformation pour coopérer avec ladite saillie dans la position de service et dans ladite position de travail,
- ladite déformation dudit corps est tournée vers l'intérieur ou vers l'extérieur du corps,
- ledit corps est configuré pour faire apparaître ladite saillie dans ladite fenêtre dans la position de service et/ou dans ladite position de travail,
- ledit corps est configuré pour que ladite saillie soit logée dans ladite fenêtre et/ou déformation et guide le mouvement de l'interface de connexion de la position de travail à ladite position de service,
- ledit corps est configuré pour que ladite saillie soit reçue à l'extérieur de ladite déformation et guide le mouvement de l'interface de connexion de la position de travail à ladite position de service,
- ladite saillie est en forme de pion et/ou de nervure,
- ladite saillie est fendue,
- ladite saillie comporte deux éléments en saillie, notamment pour éviter le pivotement de l'interface de connexion dans l'axe de l'un desdits éléments en saillie,
- ladite fenêtre ou déformation comprend une portion en forme de haricot, notamment en arc de cercle, de manière à autoriser une rotation du balai par rapport au bras,
- ladite saillie est montée coulissante dans ou sur la dite fenêtre et/ou déformation pour autoriser la rotation du balai par rapport au bras, dans ladite position de travail, jusqu'à un angle du balai par rapport au bras, égal à environ plus ou moins 15° de l'angle nul, avantageusement 12° et plus particulièrement 10° de l'angle nul,
- ladite fenêtre et/ou déformation et ladite saillie sont pourvues de formes complémentaires permettant leur guidage l'une par rapport à l'autre en position de service et/ou de travail,
- ladite fenêtre et/ou déformation est formée sur une partie latérale du corps de la pièce terminale,
- ladite fenêtre et/ou déformation est issue de découpe et /ou d'un emboutissage d'une paroi du corps de la pièce terminale,
- ladite fenêtre et/ou déformation comporte un évidement apte à recevoir, notamment en encliquetage, et maintenir en position de service ladite saillie,
- ladite fenêtre et/ou déformation comporte un évidement apte à recevoir et maintenir en position de service ladite saillie, à l'extraction du balai, et inversement à permettre la connexion du balai et son dégagement de l'évidement à la connexion du balai sur le bras,
- ledit évidement est formé à une extrémité dudit haricot, notamment transversalement à l'extension de l'haricot, à son extrémité inférieure, en particulier radialement,
- ledit ensemble comporte deux fenêtres et/ou déformations opposées formées chacune sur une partie latérale du corps de la pièce terminale et symétriques l'une de l'autre par rapport à un plan longitudinal médian de la pièce terminale,
- ledit corps est configuré pour accueillir ledit adaptateur par un mouvement de translation selon un axe longitudinal d'extension de la pièce terminale,
- ledit corps est configuré pour permettre une fixation dudit adaptateur de façon réversible, par exemple au moyen d'un bouton escamotable de verrouillage, sur la pièce terminale,
- ladite pièce terminale est configurée pour permettre la dite position de service dans une position extrême de l'interface de connexion, notamment dans un angle maximal de l'interface de connexion relativement à la pièce terminale, maintenu par une pièce de sécurité du système d'essuyage et destinée à empêcher tout retrait du balai de la pièce terminale, en position de travail,
- ladite pièce terminale est configurée pour permettre la dite position de service dans une position de l'interface de connexion parallèle ou proche à la direction de l'axe d'extension longitudinal d de la pièce terminale,
- ladite interface de connexion est configurée pour que au moins l'un de ses embouts de connexion soit reçu, en position de service, par une pièce guide de la connexion, par exemple à forme d'entonnoir, du système d'essuyage,
- ladite interface de connexion comprend un connecteur hydraulique et/ou un connecteur électrique, ces éléments étant généralement associés ou reliés l'un à l'autre.

L'invention porte également sur un dispositif de connexion d'un système d'essuyage de pare brise de véhicule comprenant ledit ensemble tel que décrit plus haut, un connecteur mécanique, destiné à être fixé sur ledit balai pour son rattachement au bras porte-balai, ledit adaptateur étant monté articulé sur ledit connecteur mécanique pour permettre la rotation entre le balai et le bras, ledit adaptateur étant en outre configuré pour être inséré dans ladite pièce terminale.

Ladite pièce terminale, ledit adaptateur et/ou ledit connecteur mécanique pourront être mutuellement configurés pour guider le connecteur mécanique et/ou l'adaptateur, notamment en translation, en particulier dans une direction longitudinale, dans ladite pièce terminale lors de l'insertion de l'un dans l'autre. Ledit connecteur mécanique est en outre avantageusement configuré pour permettre un raccordement hydraulique et/ou électrique du balai à ladite interface de connexion.

Ledit connecteur mécanique pourra coopérer avec le bras porte-balai, en particulier ladite pièce terminale de ce dernier par ladite pièce de sécurité, prévue sur le connecteur mécanique, pour empêcher tout retrait du balai de la pièce terminale, en position de travail.

L'invention permet en position de service, lors d'un changement de balai, une mise en butée de l'interface de connexion sur la pièce terminale pour un angle permettant d'éviter ladite pièce de sécurité.

Ladite pièce de sécurité est, par exemple, en forme de triangle articulé sur le connecteur mécanique, dressée en regard de ladite pièce terminale.

Le connecteur mécanique pourra être configuré pour supporter l'interface de connexion en position de travail.

Ledit connecteur mécanique pourra comprendre ladite pièce guide de connexion permettant le guidage dans l'orientation voulue de l'interface de connexion par rapport à la pièce terminale.

Le verrouillage de connexion du connecteur mécanique à la pièce terminale, et, par suite, du balai au porte-balai, pourra être assuré par l'intermédiaire du bouton de verrouillage dudit adaptateur coopérant, par exemple, avec une ouverture de la pièce terminale.

L'invention concerne également un système d'essuyage de pare brise de véhicule comprenant un balai, un bras porte-balai et un dispositif de connexion, tel que décrit ci-dessus, pour l'accrochage du balai au bras porte-balai et leur raccordement hydraulique et/ou électrique.

L'invention sera mieux comprise, et d'autres buts, détails, caractéristiques et avantages de celle-ci apparaîtront plus clairement au cours de la description explicative détaillée qui va suivre, de plusieurs modes de réalisation de l'invention donnés à titre d'exemples purement illustratifs et non limitatifs, en référence aux dessins schématiques annexés.

Sur ces dessins :
- la figure 1 est une vue générale, en perspective, d'un système d'essuyage pour véhicule automobile comprenant un dispositif de connexion selon un mode de réalisation de l'invention ;
- la figure 2 est une vue de détail de la figure 1 ;
- la figure 3 est une vue en élévation d'un dispositif de connexion d'un système d'essuyage de pare brise de véhicule selon un premier mode de réalisation de l'invention, en position de travail;
- la figure 4 est une vue analogue à la figure 3 de ce dispositif de connexion en position de service;
- la figure 5 est une vue analogue à la figure 3 de ce dispositif de connexion après démontage du dispositif de connexion;
- la figure 6 est une vue en élévation d'un dispositif de connexion d'un système d'essuyage de pare brise de véhicule selon un autre mode de réalisation de l'invention, en position de service;
- la figure 7 est une vue analogue à la figure 6 de ce dispositif de connexion en cours de déconnexion;
- la figure 8 est une vue analogue à la figure 6 de ce dispositif de connexion en cours de connexion,
- les figures 9, 10 et 11 sont des figures en perspective montrant des variantes de réalisation du dispositif de connexion, seules une tête de bras et une interface de connexion dudit dispositif étant illustrées, et
- la figure 12 est une vue en élévation, sans le connecteur mécanique, d'un dispositif de connexion d'un système d'essuyage de pare brise de véhicule selon encore un autre mode de réalisation de l'invention.

Il faut noter que les figures exposent l'invention de manière détaillée et qu'elles peuvent, bien entendu, servir à mieux définir l'invention le cas échéant.

Dans la suite de la description, les dénominations longitudinales ou latérales se réfèrent à l'orientation du bras porte-balai sur lequel est monté le balai d'essuie-glace. La direction longitudinale correspond à l'axe principal du porte-balai dans lequel il s'étend alors que les orientations latérales correspondent à des droites concourantes, c'est-à-dire qui croisent la direction longitudinale, notamment perpendiculaires à l'axe longitudinal du porte-balai. Pour les directions longitudinales, la dénomination avant désigne la direction allant depuis une extrémité proximale vers une extrémité distale du bras porte-balai et la dénomination arrière la direction opposée. En outre, les directions référencées comme supérieures ou inférieures correspondent à des orientations perpendiculaires au plan de rotation du porte-balai, la dénomination inférieure contenant le plan du pare-brise.

Enfin, des références numériques identiques sont utilisées pour désigner des éléments identiques ou analogues.

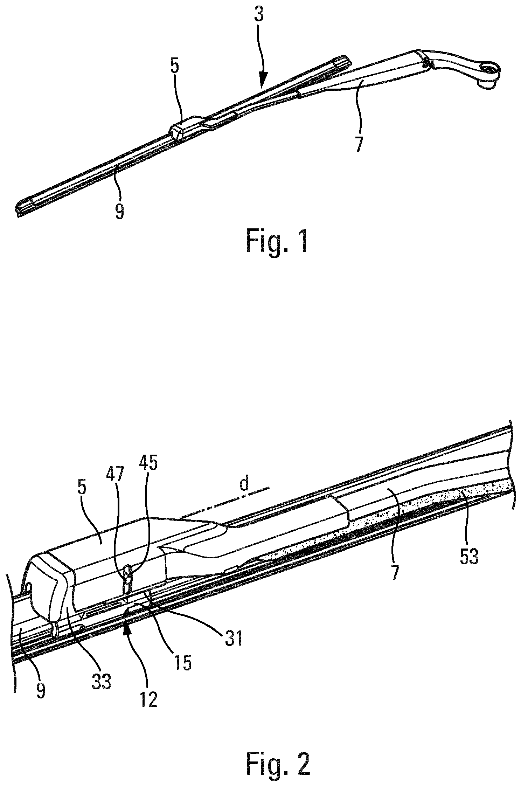

Comme illustré aux figures 1 et 2, l'invention concerne un système d'essuyage 3 comprenant un balai 9 et un bras porte-balai 7. Le balai 9 est, par exemple, un balai plat tels qu'évoqué plus haut. Ledit système comprend en outre un dispositif de connexion 12 du balai 9 au bras 7, qui fait également, en lui-même, l'objet de l'invention.

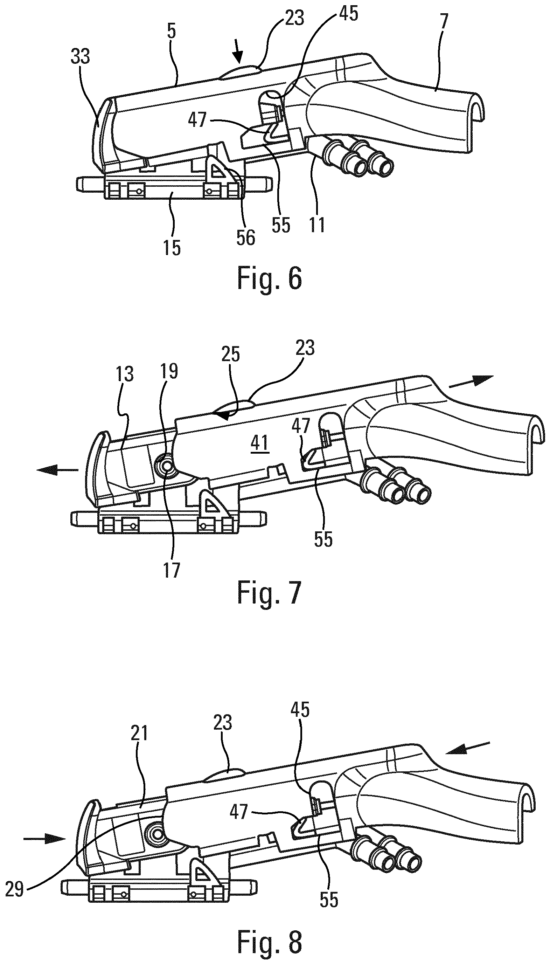

Comme illustré aux figures 6 à 8, le dispositif de connexion 12 comprend, par exemple, un adaptateur 13 et un connecteur mécanique 15.

Ledit adaptateur 13 permet la rotation entre le balai 9 et le bras porte-balai 7. En effet, le balai doit présenter au moins un degré de liberté en rotation par rapport au bras porte-balai, et plus spécifiquement par rapport à une pièce terminale 5 dudit bras 7, pour permettre au balai de suivre la courbure du vitrage à essuyer. Ledit adaptateur 13 est monté articulé sur le connecteur mécanique 15, lequel comprend ici pour cela des pions 17 ménagés sur ses flancs latéraux, lesdits pions coopérant avec des orifices 19 ménagés sur des flancs latéraux dudit adaptateur. Le connecteur mécanique 15 est, par exemple, inséré dans une chape 21 de l'adaptateur.

L'adaptateur 13 est ici configuré pour s'insérer dans la pièce terminale 5 par un mouvement de translation selon un axe longitudinal d d'extension de la pièce terminale 5, pour venir en position d'utilisation, où il est situé en butée contre la pièce terminale 5 dans laquelle il est fixé de façon réversible au moyen d'un bouton escamotable 23 de verrouillage, qui coopère avec un évidement 25 pratiqué à cet effet dans la pièce terminale 5. Dans cette position, ladite pièce terminale 5 recouvre l'adaptateur 13. Le bouton escamotable 23 et/ou l'évidement 25 sont ici prévus en partie supérieure, respectivement dudit adaptateur 13 et de ladite pièce terminale 5, ledit bouton 23 étant situé à l'extrémité arrière d'une patte flexible de l'adaptateur. De nombreuses variantes de verrouillage sont possibles.

La pièce terminale 5 présente ici une forme en « U » renversé où l'ouverture de cette forme en « U » est destinée à faire face au pare-brise. La forme en chape 21 de l'adaptateur 13 est, par exemple, complémentaire au volume interne de la pièce terminale 5, de sorte à venir se loger dans cette dernière. Lors de la mise en place du balai 9 dans le bras porte-balai 7, l'adaptateur est introduit dans ladite pièce terminale par une ouverture 29 prévue à l'extrémité distale de cette dernière et guidé en translation dans celle-ci par des rebords 31 de ses flancs latéraux (figure 2).

L'adaptateur 13 ou le connecteur mécanique 15 solidarisé au balai 9 pourra présenter une paroi externe 33, dénommée casquette, fermant la partie avant de la pièce terminale 5.

Cela étant, l'invention concerne également un ensemble 1 pour la réalisation du système d'essuyage 3. Ledit ensemble comporte la pièce terminale 5 du bras 7 et une interface de connexion 11 logée dans cette pièce terminale 5. Ladite interface de connexion 11 comprend ici un connecteur hydraulique 37 et/ou un connecteur électrique 39, éventuellement solidarisés l'un à l'autre, dits dans la suite également connecteur hydraulique et/ou électrique. Ladite interface de connexion 11 sert à amener un liquide au balai d'essuyage 9 et/ou pour le chauffage du liquide ou du balai.

La face de l'adaptateur et/ou du connecteur mécanique opposée à la casquette 33, dite face intérieure, est tournée vers ledit connecteur hydraulique et/ou électrique 11.

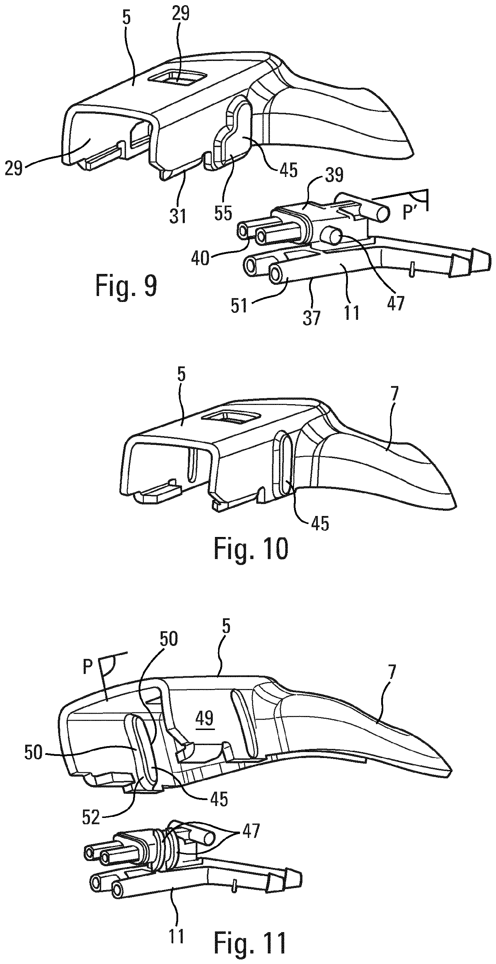

Le connecteur mécanique 15 comporte ici des orifices de connexion (non visibles) avec des conduits correspondants 51 du connecteur hydraulique 37 et menant à des canaux internes 53 de distribution du liquide lave-glace au balai, et des orifices pour la connexion de fiches 40 du connecteur électrique (figures 9 et 11).

L'interface de connexion 11 est laissée libre de ses mouvements en position de travail tout en pouvant être orientée dans la direction adéquate, en position de service, au moment du montage du balai.

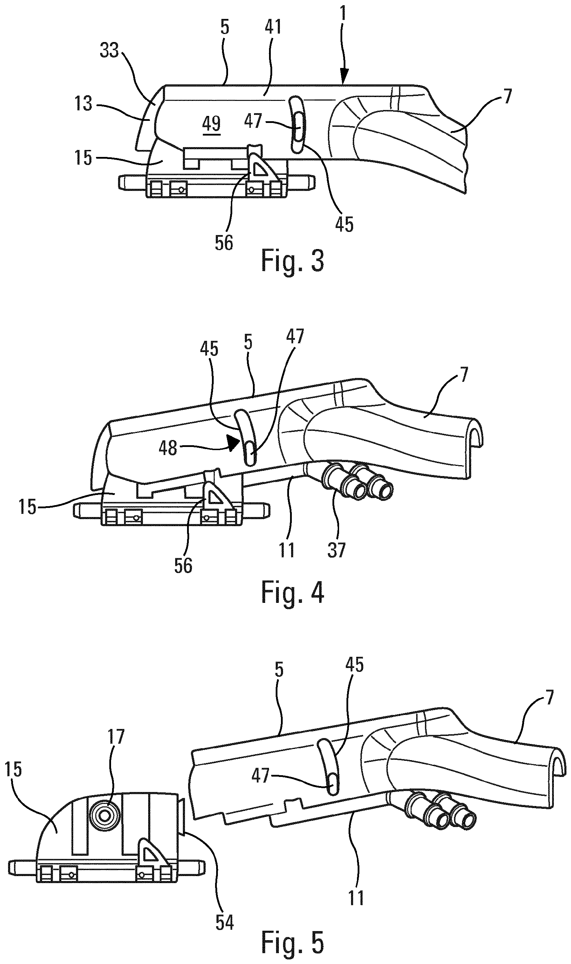

Selon l'invention, ladite pièce terminale 5 est configurée pour guider ladite interface de connexion 11 en position de travail comme cela apparait plus particulièrement à la figure 3, et en position de service, tel qu'on le voit aux figures 4, 5, 6. En assurant un tel guidage, on peut faire fonctionner l'interface de connexion directement avec la pièce terminale, sans pièce intermédiaire.

Ladite interface de connexion est en outre avantageusement retenue par ladite pièce terminale, en position de service, au moment du démontage du balai comme on le verra plus loin.

Ladite pièce terminale 5 peut en particulier être configurée pour faire apparaître ou disposer au moins un pion 47 de ladite interface de connexion 11 sur la pièce terminale 5, dans une position de service autorisant la déconnexion et/ou la connexion du connecteur sur le bras.

Ainsi, le connecteur hydraulique et/ou électrique 11 peut être mis en position de service sur la pièce terminale par l'utilisateur, de façon apparente à l'utilisateur par la position dudit pion 47, visible de l'extérieur.

Ladite position de service peut être visualisée par l'utilisateur au passage du pion 47 dans ladite position de service en un point, par exemple un repère 48 sur la pièce terminale signalant ladite position de service dans une position déterminée.

Ladite position de service peut encore être visualisée ou repérée dans une position dudit pion 47 en butée sur ladite pièce terminale 5, par exemple dans le fond d'une lumière ou fenêtre 45 de la pièce terminale, comme on le voit sur la figure 4.

Ledit pion 47 pourra être rendu visible dans ladite position de service et dans ladite position de travail comme représenté sur les figures 3 et 4 où il est visible dans la fenêtre 45. Bien que non représenté, le pion pourra être visible uniquement dans la position de service, par exemple dans une lumière de la pièce terminale correspondant à la position de service.

Plus précisément, et comme représenté sur les figures, ladite pièce terminale 5 comporte un corps 41 configuré avec au moins une fenêtre ou déformation 45 pour faire apparaître ou disposer ledit pion 47 dans ladite fenêtre ou déformation 45 dans la position de service et/ou dans ladite position de travail.

Le pion 47 est avantageusement monté coulissant dans ladite fenêtre ou déformation et guide ainsi le mouvement du connecteur hydraulique et/ou électrique 11 de la position de travail à ladite position de service.

Dans le cas de déformations 45 du corps (figures 9 à 11), la déformation est avantageusement fermée et le pion est protégé des salissures, notamment du givre, pouvant entraver le mouvement du balai dans le bras.

Le pion peut être remplacé par une nervure 47 comme on le voit à la figure 11. Dans ce mode, la pièce terminale 5 comporte deux déformations intérieures 45 symétriques l'une de l'autre relativement à un plan longitudinal médian P de la pièce terminale. Chacune des déformations 45 est formée sur une paroi latérale 49 du corps 41 et reçoit en coulissement deux nervures 47 de l'interface de connexion sur ses côtés longitudinaux 50. Cette déformation comprend un renflement externe 52 à chacune de ses extrémités inférieures formant butée pour les dites nervures. Autrement dit, la position de service dans ce mode peut être obtenue par une mise en position indexée de l'interface correspondant à ladite mise en butée des nervures sur les renflements et/ou par un auto guidage, en particulier un auto centrage de l'interface dans la pièce terminale, par l'intermédiaire d'une pièce guide 54 du connecteur mécanique décrite plus loin. Ces mêmes possibilités existent dans le cas des modes de réalisation des figures 3 à 5 et 10 où le pion 47 coulisse dans une fenêtre ou déformation 45.

Ledit pion pourra être configuré pour autoriser la rotation du balai par rapport au bras, dans ladite position de travail, jusqu'à un angle du balai par rapport au bras, égal à environ plus ou moins 15° de l'angle nul, avantageusement 12° et plus particulièrement 10° de l'angle nul où le balai est parallèle à l'axe d.

Ladite fenêtre ou déformation 45 et ledit pion 47 peuvent être pourvus de formes complémentaires, par exemple en portion de haricot comme dans le premier mode et celui de la figure 10, notamment en arc de cercle, ce qui permet de guider en rotation ledit connecteur hydraulique et/ou électrique 11 dans ledit bras ou le balai par rapport au bras.

Ladite fenêtre ou déformation 45 est, par exemple, formée sur une partie latérale du corps 41 de la pièce terminale, étant par exemple issue de découpe ou d'embouti plein ou ouvert d'une paroi 49 du corps de la pièce terminale.

De préférence, ledit ensemble 1 comporte deux fenêtres ou déformations opposées 45 formées chacune sur une partie latérale du corps de la pièce terminale et symétriques l'une de l'autre par rapport à un plan longitudinal médian P de la pièce terminale. Il en est de même pour le connecteur hydraulique et/ou électrique 11 dont les deux pions latéraux 47 sont symétriques l'un de l'autre par rapport à un plan longitudinal médian P' de l'interface.

La ou lesdites fenêtres ou déformations 45 peuvent également comporter un évidement 55 apte à recevoir et maintenir en position ou orientation de service ledit pion 47, à l'extraction du balai, comme représenté dans le deuxième mode à la figure 7 ou à la figure 9. Un tel mode de réalisation facilite aussi la connexion du balai sur le bras comme on le voit plus particulièrement à la figure 8.

Ledit évidement 55 peut être formé à une extrémité dudit haricot, transversalement à l'extension de l'haricot à son extrémité inférieure, en particulier radialement. Cet évidement 55 est conformé pour retenir le pion 47 lors de la mise en position de service et l'extraction subséquente du balai selon la flèche sur la figure 7. Dans ce cas, le pion est bloqué en position de service.

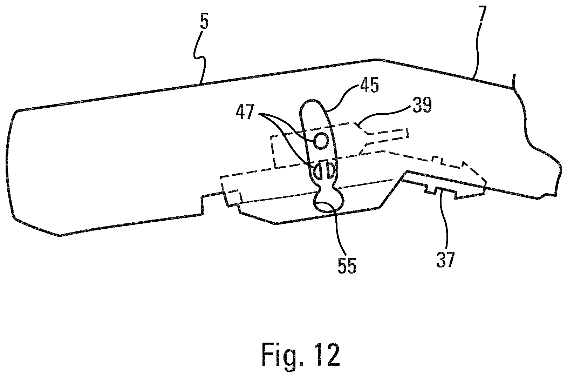

Selon le mode de réalisation de la figure 12, l'évidement 55 est situé dans le prolongement angulaire du reste de la fenêtre 45. Il est ici prévu apte à recevoir et maintenir en position de service, notamment en encliquetage, ladite saillie 47. Cet évidement, formé à la partie inférieure de la fenêtre, reçoit une saillie en forme de pion fendu 47, ce qui confère d'avantage d'élasticité pour réaliser ou quitter ledit encliquetage et facilite la manoeuvre. Ladite saillie comporte ici deux éléments en saillie, un premier pion 47 sur le connecteur hydraulique 37 et un deuxième pion 47 sur le connecteur électrique 39, ce qui garantit la position de l'interface de connexion dans la tête de bras et empêcher son pivotement dans la tête de bras selon l'axe de saillie, s'il en avait été prévu qu'une. On peut d'ailleurs noter que doublonner de la sorte les pions 47 trouve le même avantage les autres modes de réalisation.

On notera que dans les modes de réalisations précédents, en position de travail, le connecteur hydraulique et/ou électrique 11 pourra être porté par ledit connecteur mécanique 15, en particulier grâce à un encliquetage de l'un sur l'autre.

Ladite pièce terminale 5 est avantageusement configurée pour permettre la dite position de service dans une position extrême de l'interface de connexion 11, notamment dans un angle maximal de l'interface de connexion relativement à la pièce terminale, voir les figures 4 et 6. Cette position angulaire pourra correspondre à une position angulaire minimum entre le bras et le balai pour le démontage, obtenue par une pièce de sécurité 56 du système d'essuyage. Cette pièce de sécurité 56 est destinée à empêcher tout retrait du balai de la pièce terminale ou du bras, en position de travail, notamment lors d'une casse de la languette portant ledit bouton de verrouillage 23 du balai au bras.

Ladite pièce de sécurité 56 est en forme de triangle et située sur le connecteur mécanique 15, étant dressée en regard de ladite pièce terminale 5 pour porter contre cette dernière, à sa base.

Ladite pièce terminale est en outre avantageusement configurée pour permettre la mise en service de la pièce terminale 5 et de ladite interface 11 lorsqu'ils sont disposés hors de ladite position de service, de sorte que la rotation du balai 9 par rapport au bras 7 soit permise en position de travail.

Ladite mise en position de service est obtenue par un mouvement du balai 9 par rapport audit bras 7, en tenant compte de ladite pièce de sécurité 56 lorsqu'elle est prévue sur le système d'essuyage.

Comme déjà évoqué plus haut, ledit connecteur hydraulique et/ou électrique 11 peut encore être configuré pour qu'au moins l'un de ses embouts de connexion ou conduits 51, 40 soit reçu par une dite pièce guide 54 de la connexion, par exemple en forme d'entonnoir, solidaire ici du connecteur mécanique 15 (figure 5). Cette pièce 54 guide et reçoit lesdits embouts ou conduits 51, 40 à la connexion et oriente ainsi le connecteur hydraulique et/ou électrique 11 pour sa mise en connexion dans le connecteur mécanique 15, selon l'orientation désirée.

La mise en position de service est alors avantageusement réalisée par la pièce guide 54 dans une position du connecteur hydraulique et/ou électrique 11 parallèle ou proche à la direction de l'axe d'extension longitudinal d de la pièce terminale, c'est à dire lorsque la pièce terminale 5 et les conduits ou câbles 51, 40 du connecteur hydraulique et/ou électrique sont disposés selon ladite direction d'extension longitudinale d de la pièce terminale.

Le fonctionnement des dispositifs de connexion est à présent décrit.

Pour changer un balai, il suffit de mettre en position de service le connecteur hydraulique et/ou électrique 11 relativement à la pièce terminale 5, par exemple en tournant le balai 9 par rapport au bras 7, tel que représenté à la figure 4. A ce moment, la mise en position de service étant réalisée, le bouton de verrouillage 23 de l'adaptateur peut être enfoncé comme représenté à la figure 6, et l'adaptateur 13 et donc le balai 9 qui y est fixé, peut être extrait en translation de la pièce latérale 5 (figure 7).

La connexion en vue du remplacement du balai 9 par un autre s'effectue selon un mouvement inverse au précédent, le verrouillage du bouton 23 étant réalisé à la fin de l'insertion de l'adaptateur 13 dans la pièce terminale 5 et donc du balai dans le bras. A ce moment, le balai 9 peut être tourné par rapport au bras 7 et l'interface de connexion est guidée dans ladite pièce terminale et le reste jusqu'au changement suivant.

Dans le cas d'une connexion déconnexion au moyen de la pièce guide 54, celle-ci est réalisée par un guidage d'orientation automatique en position de service de l'interface de connexion 11 sur le connecteur mécanique 15, à l'engagement du balai dans la tête de bras, le verrouillage du balai sur le bras étant réalisé au terme de l'engagement. La déconnexion est réalisée selon une manoeuvre inverse à la précédente après déverrouillage de l'adaptateur de la pièce terminale.

L'invention apporte ainsi une possibilité de remplacement facile d'un balai par un autre dans les équipements pour l'essuyage des vitres des automobiles comprenant des balais d'essuyage réalisés sous la forme dénommée "flat blade".

## Revendications

1. Ensemble (1) pour la réalisation d'un système d'essuyage (3) de pare brise de véhicule automobile comprenant une pièce terminale (5) d'un bras (7) porte-balai, destiné à déplacer un balai d'essuyage (9), et une interface de connexion (11), ladite pièce terminale (5) étant configurée pour accueillir un adaptateur (13) permettant la rotation entre ledit bras (7) et le balai (9), ledit ensemble (1) étant apte à occuper une position de travail dans laquelle ladite interface de connexion (11) est libre par rapport à ladite pièce terminale (5) et une position de service, dans laquelle ladite interface de connexion (11) est orientable par rapport à ladite pièce terminale (5), l'emsemble étant **caractérisé en ce que** ladite pièce terminale (5) étant configurée pour guider ladite interface de connexion (11) en position de travail et en position de service.

2. Ensemble (1) selon la revendication 1, dans lequel ladite interface de connexion (11) est rendue visible à travers la pièce terminale (5), dans la position de service et/ou dans la position de travail.

3. Ensemble (1) selon l'une quelconque des revendications précédentes dans lequel ladite interface de connexion (11) est mise en butée sur la pièce terminale (5) dans ladite position de service.

4. Ensemble (1) selon l'une quelconque des revendications précédentes, dans lequel ladite interface de connexion (11) est maintenue orientée par ladite pièce terminale (5) dans ladite position de service.

5. Ensemble (1) selon l'une quelconque des revendications précédentes, dans lequel ladite interface de connexion (11) comprend au moins une saillie (47).

6. Ensemble (1) selon la revendication précédente, dans lequel ladite pièce terminale (5) comporte un corps (41) configuré avec au moins une fenêtre et/ou déformation (45) pour coopérer avec ladite saillie (47) dans la position de service et dans ladite position de travail.

7. Ensemble (1) selon la revendication précédente, dans lequel ledit corps (41) est configuré pour faire apparaître ladite saillie (47) dans ladite fenêtre (45) dans la position de service et/ou dans ladite position de travail.

8. Ensemble (1) selon la revendication 6 ou 7, dans lequel ledit corps (41) est configuré pour que ladite saillie (47) soit logée dans ladite fenêtre et/ou déformation (45) et guide le mouvement de l'interface de connexion (11) de la position de travail à ladite position de service.

9. Ensemble (1) selon la revendication 6, dans lequel ledit corps (41) est configuré pour que ladite saillie (47) soit reçue à l'extérieur de ladite déformation (45) et guide le mouvement de l'interface de connexion (11) de la position de travail à ladite position de service.

10. Ensemble (1) selon l'une quelconque des revendications 5 à 9, dans lequel ladite saillie (47) est en forme de pion et/ou de nervure.

11. Ensemble (1) selon l'une quelconque des revendications 6 à 10, dans lequel ladite fenêtre et/ou déformation (45) comporte un évidement (55) apte à recevoir et maintenir en position de service ladite saillie (47).

12. Ensemble (1) selon l'une quelconque des revendications 6 à 11, comportant deux fenêtres et/ou déformations opposées (45) formées chacune sur une partie latérale du corps (41) de la pièce terminale et symétriques l'une de l'autre par rapport à un plan longitudinal médian P de la pièce terminale.

13. Ensemble (1) selon l'une quelconque des revendications précédentes, dans lequel ladite pièce terminale (5) est configurée pour permettre la dite position de service dans une position extrême de l'interface de connexion (11), notamment dans un angle maximal de l'interface de connexion (11) relativement à la pièce terminale (5), maintenu par une pièce de sécurité (56) du système d'essuyage et destinée à empêcher tout retrait du balai (9) de la pièce terminale (5), en position de travail.

14. Ensemble (1) selon l'une quelconque des revendications 1 à 12, dans lequel ladite pièce terminale (5) est configurée pour permettre la dite position de service dans une position de l'interface de connexion (11) parallèle ou proche à la direction de l'axe d'extension longitudinal d de la pièce terminale.

15. Ensemble (1) selon l'une quelconque des revendications précédentes, dans lequel ladite interface de connexion (11) est configurée pour que au moins l'un de ses embouts ou conduits de connexion (51, 40) soit reçu, en position de service, par une pièce guide (54) de la connexion, par exemple en forme d'entonnoir, du système d'essuyage.

16. Dispositif de connexion (12) d'un système d'essuyage (3) de pare brise de véhicule comprenant un connecteur mécanique (15), destiné à être fixé sur ledit balai (9) pour son rattachement au bras (7) porte-balai, un adaptateur (13) destiné à être monté articulé sur ledit connecteur mécanique (15) pour permettre la rotation entre le balai (9) et le bras (7), ledit adaptateur (13) étant configuré pour être inséré dans une pièce terminale (5) dudit ensemble (1) selon l'une quelconque des revendications précédentes.

17. Dispositif de connexion (12) selon la revendication 16, dans lequel ledit connecteur mécanique (15) est configuré pour permettre un raccordement hydraulique et/ou électrique du balai (9) à l'interface de connexion (11).

18. Dispositif de connexion (12) selon l'une quelconque des revendications 16 à 17, dans lequel ledit connecteur mécanique (15) est prévu pour supporter l'interface de connexion (11) en position de travail.

19. Dispositif de connexion (12) selon l'une quelconque des revendications 16 à 18, la revendication étant prise dans son rattachement à la revendication 16, dispositif dans lequel ledit connecteur mécanique (15) comprend ladite pièce guide (54) de connexion permettant le guidage dans l'orientation voulue de l'interface de connexion (11) par rapport à la pièce terminale (5).

20. Système d'essuyage (3) de pare brise de véhicule comprenant un balai (9), un bras (7) porte-balai et un dispositif de connexion (12) selon l'une des revendications 16 à 19, permettant d'accrocher ledit balai (9) audit bras (7) porte-balai.

## Patentansprüche

1. Einheit (1) zur Umsetzung eines Scheibenwischsystems (3) für eine Windschutzscheibe eines Kraftfahrzeugs, welche ein Endstück (5) eines Wischerarms (7), der dazu bestimmt ist, ein Wischblatt (9) zu verlagern, und eine Anschlussschnittstelle (11) umfasst, wobei das Endstück (5) dafür eingerichtet ist, einen Adapter (13) aufzunehmen, der die Drehung zwischen dem Arm (7) und dem Wischblatt (9) ermöglicht, wobei die Einheit (1) in der Lage ist, eine Arbeitsposition, in welcher die Anschlussschnittstelle (11) frei in Bezug auf das Endstück (5) ist, und eine Serviceposition, in welcher die Anschlussschnittstelle (11) in Bezug auf das Endstück (5) ausrichtbar ist, einzunehmen, wobei die Einheit **dadurch gekennzeichnet ist, dass** das Endstück (5) dafür eingerichtet ist, die Anschlussschnittstelle (11) in der Arbeitsposition und in der Serviceposition zu führen.

2. Einheit (1) nach Anspruch 1, wobei die Anschlussschnittstelle (11) in der Serviceposition und/oder in der Arbeitsposition durch das Endstück (5) hindurch sichtbar gemacht ist.

3. Einheit (1) nach einem der vorhergehenden Ansprüche, wobei die Anschlussschnittstelle (11) in der Serviceposition am Endstück (5) zur Anlage gebracht ist.

4. Einheit (1) nach einem der vorhergehenden Ansprüche, wobei die Anschlussschnittstelle (11) in der Serviceposition durch das Endstück (5) ausgerichtet gehalten wird.

5. Einheit (1) nach einem der vorhergehenden Ansprüche, wobei die Anschlussschnittstelle (11) wenigstens einen Vorsprung (47) umfasst.

6. Einheit (1) nach dem vorhergehenden Anspruch, wobei das Endstück (5) einen Körper (41) aufweist, der mit wenigstens einem Fenster und/oder wenigstens einer Verformung (45) ausgebildet ist, um in der Serviceposition und in der Arbeitsposition mit dem Vorsprung (47) zusammenzuwirken.

7. Einheit (1) nach dem vorhergehenden Anspruch, wobei der Körper (41) dafür eingerichtet ist, in der Serviceposition und/oder in der Arbeitsposition den Vorsprung (47) in dem Fenster (45) erscheinen zu lassen.

8. Einheit (1) nach Anspruch 6 oder 7, wobei der Körper (41) dafür eingerichtet ist, dass der Vorsprung (47) in dem Fenster und/oder der Verformung (45) aufgenommen wird und die Bewegung der Anschlussschnittstelle (11) von der Arbeitsposition zur Serviceposition führt.

9. Einheit (1) nach Anspruch 6, wobei der Körper (41) dafür eingerichtet ist, dass der Vorsprung (47) außerhalb der Verformung (45) aufgenommen wird und die Bewegung der Anschlussschnittstelle (11) von der Arbeitsposition zur Serviceposition führt.

10. Einheit (1) nach einem der Ansprüche 5 bis 9, wobei der Vorsprung (47) die Form eines Stifts und/oder einer Rippe hat.

11. Einheit (1) nach einem der Ansprüche 6 bis 10, wobei das Fenster und/oder die Verformung (45) eine Aussparung (55) aufweist, die in der Lage ist, in der Serviceposition den Vorsprung (47) aufzunehmen und zu halten.

12. Einheit (1) nach einem der Ansprüche 6 bis 11, welche zwei einander gegenüberliegende Fenster und/oder Verformungen (45) aufweist, die jeweils an einem seitlichen Teil des Körpers (41) des Endstücks ausgebildet und in Bezug auf eine Mittellängsebene P des Endstücks zueinander symmetrisch sind.

13. Einheit (1) nach einem der vorhergehenden Ansprüche, wobei das Endstück (5) dafür eingerichtet ist, die Serviceposition in einer äußersten Position der Anschlussschnittstelle (11) zu ermöglichen, insbesondere bei einem maximalen Winkel der Anschlussschnittstelle (11) relativ zum Endstück (5), der von einem Sicherheitsstück (56) des Scheibenwischsystems aufrechterhalten wird, das dazu bestimmt ist, in der Arbeitsposition jedes Herausziehen des Wischblattes (9) aus dem Endstück (5) zu verhindern.

14. Einheit (1) nach einem der Ansprüche 1 bis 12, wobei das Endstück (5) dafür eingerichtet ist, die Serviceposition in einer Position der Anschlussschnittstelle (11) zu ermöglichen, die parallel oder nahe zu der Richtung der Längserstreckungsachse d des Endstücks ist.

15. Einheit (1) nach einem der vorhergehenden Ansprüche, wobei die Anschlussschnittstelle (11) dafür eingerichtet ist, dass wenigstens eines ihrer Anschlussstücke oder wenigstens eine ihrer Verbindungsleitungen (51, 40) in der Serviceposition von einem Führungsstück (54) der Verbindung, zum Beispiel in Form eines Trichters, des Scheibenwischsystems aufgenommen wird.

16. Vorrichtung (12) zur Verbindung eines Scheibenwischsystems (3) einer Fahrzeugwindschutzscheibe, umfassend einen mechanischen Verbinder (15), der dazu bestimmt ist, an dem Wischblatt (9) zu dessen Befestigung am Wischerarm (7) befestigt zu sein, und einen Adapter (13), der dazu bestimmt ist, gelenkig an dem mechanischen Verbinder (15) angebracht zu sein, um die Drehung zwischen dem Wischblatt (9) und dem Arm (7) zu ermöglichen, wobei der Adapter (13) dafür eingerichtet ist, in ein Endstück (5) der Einheit (1) nach einem der vorhergehenden Ansprüche eingesetzt zu werden.

17. Verbindungsvorrichtung (12) nach Anspruch 16, wobei der mechanische Verbinder (15) dafür eingerichtet ist, einen hydraulischen und/oder elektrischen Anschluss des Wischblattes (9) an die Anschlussschnittstelle (11) zu ermöglichen.

18. Verbindungsvorrichtung (12) nach einem der Ansprüche 16 bis 17, wobei der mechanische Verbinder (15) dafür vorgesehen ist, die Anschlussschnittstelle (11) in der Arbeitsposition zu tragen.

19. Verbindungsvorrichtung (12) nach einem der Ansprüche 16 bis 18, wenn abhängig von Anspruch 16, wobei der mechanische Verbinder (15) das Führungsstück (54) zur Verbindung umfasst, das die Führung in der gewünschten Ausrichtung der Anschlussschnittstelle (11) in Bezug auf das Endstück (5) ermöglicht.

20. Scheibenwischsystem (3) für eine Fahrzeugwindschutzscheibe, welches ein Wischblatt (9), einen Wischerarm (7) und eine Verbindungsvorrichtung (12) nach einem der Ansprüche 16 bis 19, die es ermöglicht, das Wischblatt (9) am Wischerarm (7) anzuhängen, umfasst.

## Claims

1. Assembly (1) for producing a motor vehicle windscreen wiping system (3), including an end fitting (5) of a wiper arm (7) adapted to move a wiper (9) and a connection interface (11), said end fitting (5) being configured to accept an adapter (13) allowing rotation between said arm (7) and the wiper (9), said assembly (1) being adapted to occupy a working position in which said connection interface (11) is free relative to said end fitting (5) and a service position in which said connection interface (11) can be oriented relative to said end fitting (5), the assembly being **characterised in that** said end fitting (5) being configured to guide said connection interface (11) in the working position and in the service position.

2. Assembly (1) according to Claim 1, wherein said connection interface (11) is made visible through the end fitting (5) in the service position and/or in the working position.

3. Assembly (1) according to either one of the preceding claims, wherein said connection interface (11) is abutted on the end fitting (5) in said service position.

4. Assembly (1) according to any one of the preceding claims, wherein said connection interface (11) is kept oriented by said end fitting (5) in said service position.

5. Assembly (1) according to any one of the preceding claims, wherein said connection interface (11) includes at least one projection (47).

6. Assembly (1) according to the preceding claim, wherein said end fitting (5) includes a body (41) configured with at least one window and/or deformation (45) for cooperation with said projection (47) in the service position and in said working position.

7. Assembly (1) according to the preceding claim, wherein said body (41) is configured to show said projection (47) in said window (45) in the service position and/or in said working position.

8. Assembly (1) according to Claim 6 or 7, wherein said body (41) is configured so that said projection (47) is accommodated in said window and/or deformation (45) and guides the movement of the connection interface (11) from the working position to said service position.

9. Assembly (1) according to Claim 6, wherein said body (41) is configured so that said projection (47) is received outside said deformation (45) and guides the movement of the connection interface (11) from the working position to said service position.

10. Assembly (1) according to any one of Claims 5 to 9, wherein said projection (47) takes the form of a pin and/or rib.

11. Assembly (1) according to any one of Claims 6 to 10, wherein said window and/or deformation (45) includes an opening (55) adapted to receive said projection (47) and to retain it in the service position.

12. Assembly (1) according to any one of Claims 6 to 11, including two opposed windows and/or deformations (45) each formed on a lateral portion of the body (41) of the end fitting and symmetrical with each other with respect to a longitudinal median plane P of the end fitting.

13. Assembly (1) according to any one of the preceding claims, wherein said end fitting (5) is configured to allow said service position in an extreme position of the connection interface (11), notably at a maximum angle of the connection interface (11) relative to the end fitting (5), retained by a safety part (56) of the wiping system and adapted to prevent withdrawal of the wiper (9) from the end fitting (5) in the working position.

14. Assembly (1) according to any one of Claims 1 to 12, wherein said end fitting (5) is configured to allow said service position in a position of the connection interface (11) parallel to or close to the direction d of the longitudinal axis of the end fitting.

15. Assembly (1) according to any one of the preceding claims, wherein said connection interface (11) is configured so that in the service position at least one of its spigots or terminals (51, 40) is received by a connection guide part (54) of the wiping system, for example of funnel shape.

16. Connection device (12) of a vehicle windscreen wiping system (3) including a mechanical connector (15) adapted to be fixed to a wiper (9) to attach it to a wiper arm (7), an adapter (13) adapted to be articulated on said mechanical connector (15) to allow rotation between the wiper (9) and the arm (7), said adapter (13) being further configured to be inserted in an end fitting (5) of said assembly (1) in accordance with any one of the preceding claims.

17. Connection device (12) according to Claim 16, wherein said mechanical connector (15) is configured to allow hydraulic and/or electrical connection of the wiper (9) to the connection interface (11).

18. Connection device (12) according to either one of Claims 16 or 17, wherein said mechanical connector (15) is adapted to support the connection interface (11) in the working position.

19. Connection device (12) according to any one of Claims 16 to 18, the claim being taken as dependent on Claim 16, in which device said mechanical connector (15) includes said connection guide part (54) for guiding the connection interface (11) relative to the end fitting (5) with the required orientation.

20. Vehicle windscreen wiping system (3) including a wiper (9), a wiper arm (7) and a connection device (12) according to any one of Claims 16 to 19 for attaching said wiper (9) to said wiper arm (7).
